Europäisches Patentamt

European Patent Office

Office européen des brevets

(19)

(11) **EP 0 815 917 A1**

(12) **EUROPEAN PATENT APPLICATION**

(43) Date of publication:
07.01.1998 Bulletin 1998/02

(51) Int. Cl.⁶: $B01D\ 45/12$, $B01D\ 50/00$, $B04C\ 3/00$

(21) Application number: 96830379.2

(22) Date of filing: 04.07.1996

(84) Designated Contracting States:
AT BE CH DE DK ES FI FR GB GR IE IT LI LU MC NL PT SE
Designated Extension States:
AL LT LV SI

(71) Applicant:
FINMECCANICA S.p.A. AZIENDA ANSALDO
I-16128 Genova (IT)

(72) Inventors:
• Repetto, Francesco
16161 Cogoleto - Genova (IT)
• Drozdz, Matgorzata
16159 Genova (IT)

(74) Representative:
Perani, Aurelio et al
c/o JACOBACCI & PERANI S.p.A
Via Visconti di Modrone, 7
20122 Milano (IT)

(54) **Equipment for separating solid particles from fumes or gases generated in industrial processes**

(57)    The present invention relates to equipment for separating dust from a gas flow, comprising an axial cyclone (1) having a swirler (2) traversed by the gas flow, a device (4) for separating cleansed gas from dust-saturated gas and further including a rotary shaft (5) which supports the swirler (2) and drive members (6) for rotating the rotary shaft (5) and the swirler (2). The equipment according to the present invention has the advantage of ensuring extremely good separation of the dust whatever the characteristics of the flow (concentration of particles, dimensions of particles etc) by regulation of the speed and position of the swirler (2) relative to the device (4) for separating the cleansed gas. This characteristic of the equipment according to the invention thus enables auxiliary filter means, such as electrostatic filters, to be omitted downstream thereof.

FIG.4

EP 0 815 917 A1

## Description

The present invention relates to equipment for separating dust from fumes and gases exhausted from industrial processing plants.

More particularly, the present invention relates to equipment for the hot separation of dust resulting from processes for gasifying biomasses, from the incineration of solid urban refuse, industrial refuse and water treatment sludges.

The cleansing of high-temperature fumes and gases is extremely important in industrial processes since the fumes usually contain large quantities of solid pollutant particles (even as much as 1000 kg/m$^3$) constituted mainly by carbon or non-combustible inorganic materials such as silica, alumina etc. These particles must then be separated from the fumes before they are released into the atmosphere. It is particularly advantageous for this separation to occur immediately after the combustion chamber, that is when the fumes are still hot, for at least two fundamental reasons:

- the cleansing of the fumes of dust considerably simplifies the technical aspects of subsequent steps; for example, the fumes pass through various heat exchangers whose heat-exchange surfaces become covered with dust if this is present, thus reducing their thermal conductivity and hence their efficiency and, in order to restore the efficiency of the exchangers, they must be maintained frequently or expensive cleansing systems must be provided which operate with compressed air or steam jets which must act over the entire surface of the exchangers and which reduces the overall performance of the plant in any case;
- in refuse incinerators, hot filtration helps to reduce the formation of micro-pollutant organic particles to the extent that this formation is catalysed by metals in the solid particles.

The cleansing of combustion fumes from an incinerator at high temperatures involves techniques which have not yet been fully developed. In fact, until now, cyclonic cleansing devices have been used which have been combined with ceramic filters in order to enable the filtration process which starts in the cyclone to be carried out under hot conditions. These devices are, however, extremely bulky and normally require electrostatic precipitators to be provided downstream to separate the particles which are too light to be separated by means of centrifugal forces (mv$^2$/R where m is the mass of a dust particle, R is the distance of the particles from the flow axis and v is the tangential velocity) in the cyclone. The electrostatic precipitators are usually located immediately downstream of the cyclones and must operate at temperatures below 200°C, thus creating a need for heat-exchangers upstream of the cyclone with the associated problems mentioned above.

The document EP 659 462 describes an axial cyclone constituted by a cylindrical duct which houses a fixed helix, also termed a swirler, traversed by the entire flow of fumes and capable of operating at the temperatures of the gas output from the combustion chamber (800-900°C), thus making it possible to recover the energy by means of heat-exchangers, and with sufficient efficiency to allow the expensive electrostatic filters to be omitted. The swirler imposes a vortical motion on the gas flow in the duct, the tangential velocity being caused by the deflection of the particles by the blades. The dust in the gas is thus subjected to centrifugal forces and becomes concentrated in an annular peripheral region of the axial cyclone. A device for capturing the dust is located at the outlet end of the cyclone and is constituted by a tube concentric with the cyclone duct and inside this latter. The cleansed gas which flows through the central region of the axial cyclone is thus conveyed in the inner tube while the peripheral flow, rich in dust, is captured and flows through the outer tube and is then treated by further filter means.

The efficiency of the axial cyclone, like that of conventional frusto-conical or cylindrical tangential cyclones, is thus strictly dependent on the characteristics of the flow, or the flow rate of the gas, and hence on its velocity, on the concentration of dust in the gas and the dimensions of the particles constituting the dust. If one or other of these parameters differs from a nominal value for which the axial cyclone has been dimensioned, the latter's efficiency falls considerably. It is in fact clear that the tangential component of the velocity which the gas is given is uniquely correlated with the flow rate, and hence the velocity, of the gas at the input to the cyclone by the fixed geometry of the cyclone, and varies with the latter. Moreover the centrifugal effect causes a non-uniform distribution of the gas pressure in the outlet section, this being greater at the periphery of the outlet section and varying with the velocity and hence with the flow rate of the gas.

For a given fixed geometry of the capture device, the fraction of gas captured thus varies with the flow rate and, in dependence on the concentration of solid particles, may be insufficient or excessive to achieve a predetermined capture efficiency.

The dimensions of the particles constituting the dust is also a parameter which influences the capture efficiency: it is in fact known that the finer the solid particles, the higher is the centrifugal force to which they must be subjected to achieve a predetermined capture yield.

The problem at the root of the present invention is that of devising equipment for the hot separation of dust from exhaust gases from industrial processing plants which achieves extremely good separation whatever the flow rate of the gas and the concentration and dimensions of its dust content, which allows auxiliary filter means, such as electrostatic filters etc., to be omitted and enables maintenance to be minimised and which can be used effectively in variable operative conditions and can be adapted for optimum use of the equipment in various operative conditions so that the requirements of various plants can be satisfied with the same equipment which can be produced in series.

This problem is solved according to the invention by equipment for separating dust from a gas flow comprising an axial cyclone having a swirler traversed by the gas flow, a device for separating the cleansed gas from the dust-saturated gas, characterised in that it further includes a shaft which supports the swirler and drive means for rotating the shaft and the swirler.

To advantage, means are provided for displacing the swirler axially relative to the capture device so as to locate it further from or closer to this latter in order to vary the fraction of the gas captured and to adapt it to the varying concentrations of solid particles.

The characteristics and advantages of the invention will become clearer from the following description of the principle on which the operation of the equipment of the present invention is based as well as, by way of non-limitative example, of a preferred embodiment of the equipment itself, made with reference to the appended drawings, in which:

Figure 1 is a qualitative illustration of the effect of a stationary swirler on a gas flow which traverses it and the decomposition of the velocity vector into its axial and tangential components,
Figure 2 is an illustration of the decomposition of the velocity vector into its axial and tangential components when the rotation of the swirler is concordant with the tangential flow induced by the swirler,
Figure 3 illustrates the decomposition of the velocity vector into its axial and tangential components when the rotation of the swirler opposes the tangential flow induced by the swirler,
Figure 4 illustrates a preferred embodiment of the swirler according to the present invention for low gas flow rates,
Figure 5 illustrates a preferred embodiment of the swirler according to the present invention for high gas flow rates.

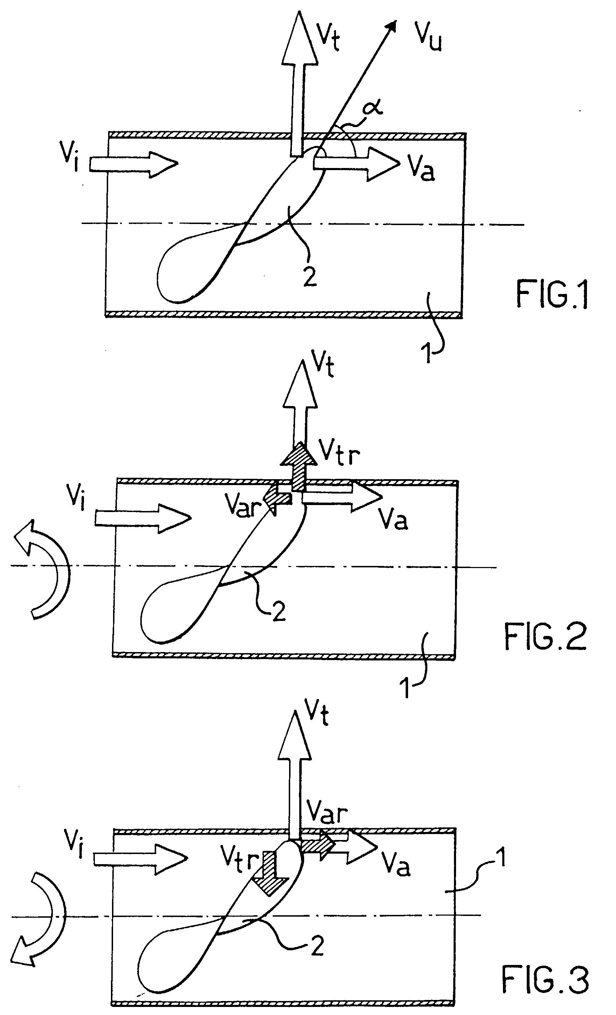

With reference to Figure 1, this shows schematically an axial cyclone constituted by a cylindrical duct 1 which houses a swirler 2, shown schematically as an helix, having blades of variable curvature with an inlet angle of substantially zero to the axial direction of a gas flow (represented by the vector Vi) fed into the duct 1 and an outlet angle a to the axis of the helix and to the direction of the inlet flow. This angle is determined so as to achieve an optimum effect for a predetermined nominal flow rate (and hence axial velocity of the fumes, concentration, dimensions and mass of the particles). The gas flow, on encountering the obstacle constituted by the bladed swirler, is deflected and follows a helical path, leaving the blades in a direction set by the outlet angle $\alpha$.

If Vi is the axial velocity of the gas on the inlet side, the velocity of the gas leaving the blades is represented by the vector Vu which may be decomposed into an axial component Va and a tangential component Vt.

If the outlet section, as shown by the schematic drawing of Figure 1, is the same as the inlet section, the axial component Va must be at least equal to Vi and the outlet velocity Vu is greater than the inlet velocity.

The increase in kinetic energy is, of course, achieved at the expense of a reduction in the piezometric load, that is the pressure of the fluid which expands and, for this reason, Va is rather greater than Vi.

If the useful inlet section of the duct is less than the outlet section, for example due to the presence of a central core or a support shaft for the blades, the axial component Va of the outlet velocity Vu may also be equal to or less than Vi. In any case, the principle of continuity (in stationary running conditions the mass entering a duct must be the same as that leaving) and the laws of thermodynamics enable Vt and Va to be determined uniquely as a function of Vi, Vt and Va, these being linked by the equation:

$$Vt=Va \ tg\alpha.$$

It is clear that the centrifugal acceleration to which the gas is subject varies with Vi, and hence with the flow rate.

In order to correct the tangential velocity Vt, which varies with the flow rate, and so as to have a predetermined value, the swirler is rotated at a velocity which may be concordant with or opposed to the helical trajectory imposed on the flow. In the case of concordant rotation, as shown in Figure 2, the outlet angle of the blades is virtually increased and the tangential velocity (represented by the vector Vtr) is increased and the axial velocity represented by Var is reduced. In the case of opposed rotation, as shown in Figure 3, the tangential velocity, represented by the vector Vtr, is reduced while the axial velocity, represented by Var, is increased. The magnitude of the increase/decrease in the vector components is obviously determined by the rate of rotation of the blades. Thus, the centrifugal force applied to the particles, which depends on the tangential component of velocity Vt±Vtr at the outlet from the swirler may be varied in order to achieve the optimum separation of the particles from the gas flow. More particularly, for a given concentration and dimension of the particles, if the gas flow rate is less than a nominal value, concordant rotation of the swirler enables the gas flow to be given a tangential velocity equal to that which it would have if the swirler were stationary, and the gas were flowing at a nominal gas flow rate. The peripheral region of the flow, rich in dust, may thus be captured by means of a capture device constituted by a tube 4 concentric with and within the duct 1 and downstream of the swirler (Figure 1) exactly as described in the document EP 659 462.

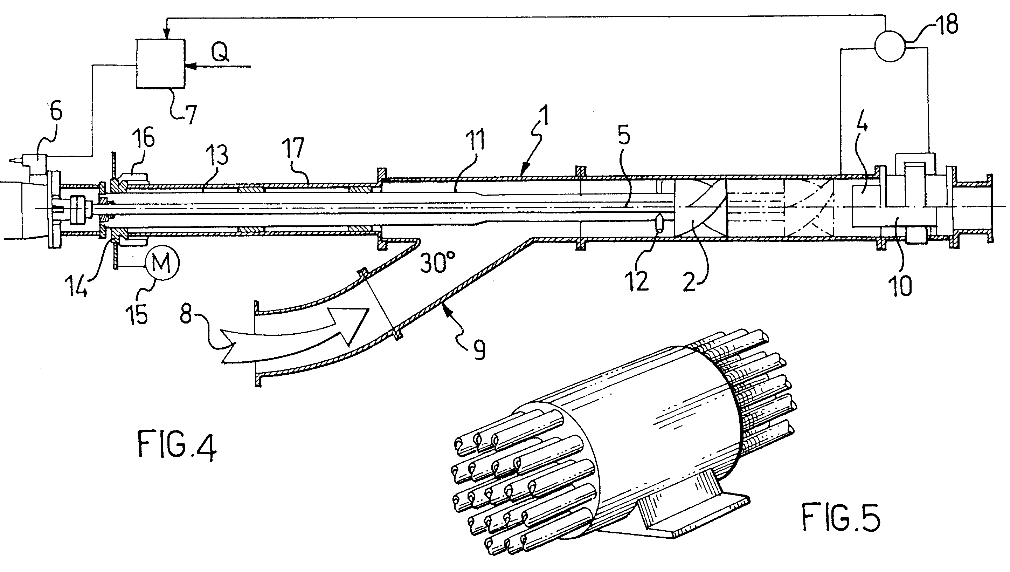

Figure 4 illustrates a preferred embodiment of the equipment for separating particles from fumes, having a rotary swirler according to the present invention. The various elements of the equipment corresponding to those of Figure 1 are identified by the same reference numbers. The equipment comprises an axial cyclone constituted by a cylindrical duct 1 which houses a swirler 2 which is free to rotate about its axis and is mounted on a rotary shaft 5 arranged co-axially with the duct 1.

The swirler 2 is rotated by drive members 6 (electric, hydraulic and pneumatic), controlled by suitable regulating devices 7 of conventional type supplied with a flow-rate signal Q such that the swirler 2 rotates at an angular velocity correlated in amplitude and direction with the flow rate signal Q.

The fumes or gases to be cleansed of dust, represented by the arrow 8, are introduced into the duct 1 through a second duct 9 arranged at a convenient angle to the duct 1 to minimise load losses caused by the change in direction of the flow. By way of example, the angle between the two ducts may be 30° or less.

Downstream of the swirler 2 relative to the inlet of fumes into the duct 1, and coaxially within the duct 1, is a capture device constituted by a tube 4 which separates the outlet section for the fumes and gases into a central portion in which the fumes and gases are conveyed by the tube 4 to apparatus which utilizes them, and an annular portion constituted by the interspace between the duct 1 and the tube 4.

This interspace communicates with a volute extraction device 10 which conveys the portion of the fumes and particles therein to auxiliary separating apparatus known per sé and irrelevant for the purposes of the present invention.

To advantage, according to a further aspect of the present invention, the axial distance of the swirler 2 from the capture tube 4 is not fixed and predetermined but variable. Thus, as shown schematically in Figure 4, the rotary shaft 5 is housed and supported by a telescopic tube system, that is, a sleeve 11 fixed against rotation but slidable axially in the duct 1 and guided therein by suitable spoked bearings such as 12 (to allow the flow of fumes), the shaft 5 having a threaded end 13 which projects from the duct 1 and has a support flange for the drive members 6. The threaded end 13 engages a nut in the form of a threaded drive gear 14 coupled to drive members 15 and fixed in a predetermined axial position relative to the duct 1 by a ring nut 16 fixed to the end of a tubular guide and housing support 17 coupled by flanges to the duct 1. The axial distance of the swirler 2 from the capture tube 4 may thus be varied by means of the drive members 15.

Thus it is possible to ensure that the equipment operates efficiently whatever the concentration of solid particles in the gas. If the flow is rich in solid particles to be captured, the peripheral annular region of the gas which carries it, driven at a high tangential velocity which may be generated close to the start of the interspace which conveys the annulus of helical gas flow, saturated with particles, to the volute expulsion device. In this case the correct working position of the swirler will be close to the expulsion tube so that the entire annulus that is moving helically is conveyed to the exhaust. On the contrary, if a relatively clean flow is present, only a small quantity of solid particles need be conveyed to the collecting device and it is possible to move the swirler away from the expulsion tube. The mass of gas which flows from the swirler 2 to the capture device 4 progressively loses the tangential component of its velocity due to friction, the more so the greater the distance of the swirler 2 from the capture device 4.

Hence the pressure distribution in the outlet section of the duct 1 is uniform and, for a given axial component of velocity and a given volumetric flow rate captured by the device 4, the maximum flow rate captured falls the greater the distance of the swirler from the capture device. It should be noted that, as the distance of the swirler from the capture device increases, the efficiency of capture of the finer particles increases as the centrifugal force developed is able to cause the particles to move a greater radial distance overall.

In the present embodiment protection is also provided against any occlusion of the exhaust duct. Such occlusion may occur whenever, for example, particularly large particles are present unforseeably in the gas or whenever there is any unforseeable temporary reduction in the flow. Such an eventuality may be controlled automatically by the introduction of a differential thrust meter 18 activated by the difference between pressures measured upstream and downstream of the expulsion device. Whenever there is even a partial blockage, the signal output by the thrust meter 18 and received by the regulating devices 7 causes the motor to rotate suddenly for several seconds in one sense and then immediately for a few seconds in the opposite sense, thus creating an effect similar to a "water hammer" , on a small scale, which unblocks the occluded exhaust opening.

Figure 5 shows a particular embodiment of the equipment according to the present invention which can be used, for example, for incinerators for solid urban refuse in which the gas flow exceeds 5000 $Nm^3/h$. In this case it is preferable to divide the main exhaust duct into a set of sub-ducts, each of which houses a filter device. One thus obtains a "cellular" device in which each duct of the cell is, for all intents and purposes, an axial cyclone as described in the embodiment above.

The axial cyclone with rotary swirler according to the invention may be applied to very different gas flow rates of between 1000 and 200,000 $Nm^3/h$ at standard temperature and pressure, and thus can be applied to gasification plants with relatively modest flows (1000-2000 $Nm^3/h$), and also to solid urban refuse incinerators (30,000-200,000 $Nm^3/h$).

The shape of the blades of the swirler is optimised by means of a suitably devised law of calculation and is thus effective for a very wide range of flow rates and for dust of various dimensions. The shape of the blades is such as to cause the movement of the flow to change from axial to helical, as a result of the swirler, in a progressive manner, the velocity vector of the fumes increasing from 0 to 54° relative to the axis of the cyclone. It is necessary for the particles to be deflected in a progressive manner to avoid disordered turbulence which would cause the particles in the fumes to move with a motion which is not purely helical with laminar flow.

A specific example of the separation of dust from fumes by means of the equipment just described will now be given.

EXAMPLE 1

A gas flow at a temperature of 900°C coming from a combustion chamber having the following characteristics:

Flow rate: 5000 Nm$^3$/h
Pressure: 1 10$^5$ Pa
Density: 1.2 Kg/Nm$^3$
Particulate concentration: 2.66 g/m$^3$

is introduced at a velocity of about 50 m/s into an axial cyclone having a diameter of 0.5 m (useful diameter 0.4 m) and a length of 3.5 m by means of a duct also having a diameter of 0.5 m and arranged at an angle of 30° to the axis of the cyclone. The gas is made to flow through a swirler constituted by six blades positioned at a distance of 3.25 m from a capture device constituted by a coaxial tube of diameter 0.47 m. Assuming a vortical conformation, the gas flow which, at this point is travelling at a velocity of about 90 m/s, separates into a peripheral portion and a central portion, the first of which includes almost all the dust particles and is directed towards the interspace where approximately 92% of the initial flow is separated as cleansed gas, obtaining effective overall separation of about 91%.

Table 1 illustrates the concentration of particles in the gas as a function of their diameters before and after the separating treatment by the equipment just described.

| Diameter of particles ($\mu$m) | Inlet (g/m$^3$) | Outlet (g/m$^3$) |
|---|---|---|
| 2 | 0.31 | 0.20 |
| 7 | 0.26 | 0.03 |
| 15 | 0.33 | 0.01 |
| 25 | 0.31 | 0.00 |
| 35 | 0.20 | 0.00 |
| 45 | 0.20 | 0.00 |
| 55 | 0.95 | 0.00 |

The equipment for separating solid particles from fumes or gas according to the present invention enables the heat exchange process in components downstream thereof to be improved substantially, with a reduction in the erosion of the materials and in the reformation of micro-polluting organic compounds due to the presence of metals in the solid particles, which act as catalysts.

While the description above makes reference to a specific use of the equipment for the hot separation of dust from fumes or gases generated in industrial incineration, granulation or gasification processes and, for this purpose, it is obvious that the equipment may easily be insulated, clearly the equipment may also be used as a separating filter for particles transported by fumes or gases at relatively low temperatures such as at the outlet from boilers or heat-recovery systems. Moreover many structural variations may be made without thereby departing from the scope of the invention.

For example the swirler may be constituted by blades having an attack edge which, instead of being at a zero angle of incidence to the axis of the swirler, are at a predetermined angle of incidence which, for a predetermined velocity (and hence flow rate) of the inlet fumes and velocity of rotation of the swirler, corresponds to a zero relative angle of incidence of the blades to the fumes on its inlet side.

Thus the two-directional velocity control of the motor which drives the swirler may be simplified to a single-direction velocity control which, according to the displacements of a measured flow rate from a nominal flow rate, modulates the rate of rotation of the motor about a nominal value other than zero.

**Claims**

1. Equipment for separating dust from a gas flow, comprising an axial cyclone (1) having a swirler (2) traversed by the gas flow, a device (4) for separating the cleansed gas from the dust-saturated gas, characterised in that it further includes a rotary shaft (5) which supports the swirler (2) and drive members (6) for rotating the rotary shaft (5) and the swirler (2).

2. Equipment according to Claim 1, including devices (7) for controlling the drive members, which receive at their inputs an indication of the velocity or volumetric flow of the gas flow in the axial cyclone for regulating the rate of rotation of the swirler in dependence on the velocity or volumetric flow indication.

3. Equipment according to Claim 2, in which the swirler is constituted by a plurality of blades each having an attack edge at a zero angle of incidence to the axis of the cyclone, and the motor is two-directional and the control devices (7) control the motor to rotate in one sense or the other according to whether the velocity or volumetric flow indication is above or below a predetermined value.

4. Equipment according to the preceding Claims, including means (13, 14, 15, 16) for moving the swirler (2) axially relative to the separating device (4).

5. Equipment for separating dust from gas according to Claims 3 or 4 including means (18, 7, 6) for preventing the occlusion of the separating device, the anti-occlusion means including a differential thrust meter (18) connected upstream and downstream of the separating device, the control means controlling the rotary shaft (5) and the swirler (2) to effect sudden rotations alternately in opposite senses in response to a signal from the sensor.

6. Equipment for separating dust from fumes, characterised in that it includes a "cellular" structure of axial cyclones each with a swirler which can be rotated by drive means and which is supplied with a proportion of the gas flow, as in the preceding Claims.

FIG.1

FIG.2

FIG.3

FIG.4

FIG.5

EP 0 815 917 A1

European Patent
Office

**EUROPEAN SEARCH REPORT**

Application Number

EP 96 83 0379

## DOCUMENTS CONSIDERED TO BE RELEVANT

| Category | Citation of document with indication, where appropriate, of relevant passages | Relevant to claim | CLASSIFICATION OF THE APPLICATION (Int.Cl.6) |
|---|---|---|---|
| X | US-A-5 149 345 (BOUCHARD CHRISTIAN ET AL) 22 September 1992 * column 2, line 30 - column 3, line 22; figure 1 * | 1 | B01D45/12 B01D50/00 B04C3/00 |
| A | PATENT ABSTRACTS OF JAPAN vol. 012, no. 165 (C-496), 18 May 1988 & JP-A-62 277169 (KAZUTERU SHINOHARA), 2 December 1987, * abstract * | 1,2 | |
| A | EP-A-0 558 091 (ATOMIC ENERGY SOUTH AFRICA ;UNIVERSAL FILTRATION PROPRIETA (ZA)) 1 September 1993 * the whole document * | 1,6 | |
| A,D | EP-A-0 659 462 (FINMECCANICA SPA) 28 June 1995 * the whole document * | 1 | |
| | | | TECHNICAL FIELDS SEARCHED (Int.Cl.6) B01D B04C |

The present search report has been drawn up for all claims

| Place of search | Date of completion of the search | Examiner |
|---|---|---|
| MUNICH | 11 November 1996 | Hild, U |

CATEGORY OF CITED DOCUMENTS

X : particularly relevant if taken alone
Y : particularly relevant if combined with another
    document of the same category
A : technological background
O : non-written disclosure
P : intermediate document

T : theory or principle underlying the invention
E : earlier patent document, but published on, or
    after the filing date
D : document cited in the application
L : document cited for other reasons

& : member of the same patent family, corresponding
    document

EPO FORM 1503 03.82 (P04C01)